# FASCICULE DE BREVET EUROPEEN

(11) **EP 3 167 030 B1**
(45) Date de publication et mention de la délivrance du brevet: **23.09.2020**
(21) Numéro de dépôt: 15759840.0
(22) Date de dépôt: 07.07.2015
(51) Int. Cl.: C10L 3/10, F25J 3/02

(54) **PROCÉDÉ ET INSTALLATION POUR LA SÉPARATION DE CONSTITUANTS LÉGERS ET DE CONSTITUANTS LOURDS DU GAZ NATUREL**
VERFAHREN UND EINHEIT ZUR TRENNUNG DER LEICHTEN UND SCHWEREN BESTANDTEILE VON ERDGAS
METHOD AND UNIT FOR SEPARATING THE LIGHT AND HEAVY COMPONENTS OF NATURAL GAS

(30) Priorité: 08.07.2014 FR 1456576
(43) Date de publication de la demande: 17.05.2017
(73) Titulaire: Total SA, 92400 Courbevoie (FR)
(72) Inventeur: CHRETIEN, Denis, F-75012 Paris (FR); AZZI, Salim, F-78180 Montigny le Bretonneux (FR); WEISS, Claire, F-92420 Vaucresson (FR)
(74) Mandataire: Plasseraud IP
(86) Numéro de dépôt international: PCT/FR2015/051879
(87) Numéro de publication internationale: WO 2016/005697

(56) Documents cités:
- WO-A2-2007/138067
- DE-A1- 3 639 779
- FR-A1- 2 905 285

## Description

### Domaine de l'invention

La présente invention concerne la séparation de constituants légers et de constituants lourds, plus particulièrement du dioxyde de carbone et des paraffines, du gaz naturel.

### Etat de la technique

Le gaz naturel est un mélange d'hydrocarbures extraits du sous-sol comprenant principalement des alcanes, du méthane et des composés plus lourds. Ces hydrocarbures constituent la ressource valorisable du gaz naturel. Toutefois, le gaz issu des puits de production contient le plus souvent d'autres constituants qui ne sont pas valorisables tels que le dioxyde de carbone et qui doivent être extraits du gaz naturel.

Jusqu'à des teneurs relativement modérées (environ 20 % mole) de dioxyde de carbone, le procédé le plus usuel pour l'extraction du gaz naturel est l'absorption par des solutions basiques faibles, typiquement des solutions d'amine. Toutefois au-delà de cette teneur, les puissances requises pour la régénération de la solution d'amine deviennent importantes et grèvent de façon non négligeable le bilan économique de la purification du gaz naturel.

C'est pourquoi de nombreux auteurs ont préféré explorer la voie de la distillation cryogénique du gaz naturel et du dioxyde de carbone, plus économique en énergie. Dans ces procédés, ces deux constituants sont séparés par distillation à des températures froides qui, en général, restent supérieures à celle du point triple du dioxyde de carbone afin d'en éviter la cristallisation.

US 4,152,129 propose ainsi une distillation du gaz naturel et du dioxyde de carbone à une pression inférieure à celle du point critique du mélange mais à une température supérieure à celle du point triple du dioxyde de carbone. Les auteurs proposent également qu'une partie au moins du rebouillage de la colonne à distiller soit obtenu par échange thermique avec le gaz naturel en cours de refroidissement.

WO 2007/126972 propose également un procédé de rectification du dioxyde de carbone dans une colonne à distiller pour le séparer du gaz naturel. Le rebouillage est également assuré par refroidissement du gaz naturel d'alimentation. Le procédé décrit ici a pour objet de séparer les constituants qui se retrouvent produits à l'état gazeux sans pour autant être liquéfiés.

WO 2010/034627 propose de procéder au refroidissement du gaz naturel en deux étapes avec une séparation du liquide et de la vapeur à chacune des étapes en vue d'en améliorer l'efficacité. Toutefois les étapes de séparation ne sont que des ballons séparateurs dont l'efficacité est moindre que celle de colonnes à distiller avec reflux.

Développé dans les années 1970 pour traiter des gaz riches en dioxyde de carbone, le procédé Ryan-Holmes permet de séparer le dioxyde de carbone du gaz et de l'utiliser dans des installations de récupération assistée d'hydrocarbures de champs matures, il permet également de valoriser les GPL contenus dans le gaz. Le procédé met en œuvre 3 à 4 colonnes de séparation et fait appel à un additif constitué d'hydrocarbures légers qui tourne en boucle dans le procédé. Dans la première colonne, le dioxyde de carbone et le méthane sont séparés de la fraction GPL. Dans la deuxième colonne, le dioxyde de carbone est séparé du méthane et de l'additif. Enfin dans la troisième colonne, le méthane est séparé de l'additif qui est recyclé dans la première colonne.

WO83/01294 décrit une amélioration du procédé Ryan-Holmes en augmentant le débit de tiers corps injecté dans le condenseur de colonne pour améliorer l'efficacité de la séparation dioxyde de carbone - gaz naturel.

Il ressort donc des documents cités que la distillation cryogénique du gaz naturel et du dioxyde de carbone est bien connue de l'art antérieur. Toutefois, le gaz naturel contient souvent des constituants lourds - essentiellement des paraffines - dont la température de cristallisation est élevée et qui risquent de geler et de boucher les équipements à mesure du refroidissement. Il convient donc de les éliminer de la manière la plus simple et la plus économique possible avant qu'elles ne soient susceptibles de geler.

Le brevet WO 2011/135538 propose de disposer différents ballons séparateurs à différentes températures pour séparer les paraffines à mesure de leur condensation. Ce procédé présente toutefois l'inconvénient de fractionner le refroidissement et de compliquer la construction de la ligne d'échangeurs de refroidissement. De plus, un simple équilibre est sensible à la composition du gaz et peu flexible en fonctionnement.

Le brevet WO99/01707, cité par le précédent, résout le problème des paraffines en prévoyant l'installation d'une colonne de rectification en amont du procédé afin d'efficacement les condenser au moyen d'une colonne à reflux. Le reflux, pour efficacement condenser les paraffines doit être relativement froid par rapport à la température ambiante.

C'est l'objet de la présente invention que de proposer un procédé de séparation du dioxyde de carbone et du gaz naturel intégré à l'élimination amont des paraffines dans un but de simplification mécanique et d'économie d'énergie.

### Résumé de l'invention

La présente invention a pour objet un procédé de traitement d'un gaz naturel G comprenant du dioxyde de carbone, du méthane et des paraffines, pour obtenir un flux gazeux enrichi en méthane M, un flux liquide enrichi en dioxyde de carbone D et un flux liquide enrichi en paraffines P, ledit procédé comprenant les étapes suivantes:
a) introduction du gaz naturel G dans une colonne de déparaffinage (3),
b) extraction des paraffines du gaz naturel G dans la colonne de déparaffinage (3), et récupération d'un flux de vapeur de tête comprenant du dioxyde de carbone et du méthane et en cuve de colonne, dudit flux liquide enrichi en paraffines P,
c) refroidissement du flux de vapeur de tête puis introduction dans une unité de séparation (5),
d) récupération d'un flux liquide et d'un flux vapeur,
e) introduction de tout ou partie du flux liquide comme liquide de reflux en tête de la colonne de déparaffinage (3) pour laver à contre-courant le gaz naturel G introduit à l'étape a),
f) refroidissement puis détente du flux vapeur obtenu à l'étape d) pour obtenir un flux condensé FC et un flux gazeux enrichi en méthane M1,
g) introduction du flux condensé FC dans une colonne à distiller (7) pour récupérer en haut de colonne un flux gazeux enrichi en méthane M2 et en cuve de colonne ledit flux liquide enrichi en dioxyde de carbone D,
h) mélange du flux gazeux enrichi en méthane M1 et du flux gazeux enrichi en méthane M2 pour obtenir ledit flux gazeux enrichi en méthane M,
i) réchauffement d'une partie du flux liquide enrichi en dioxyde de carbone D et introduction du flux réchauffé ainsi obtenu dans la colonne à distiller (7),
dans lequel le refroidissement du flux de vapeur de tête à l'étape c) et le réchauffement de la partie du flux liquide enrichi en dioxyde de carbone D à l'étape i) sont réalisés en faisant passer ledit flux de vapeur de tête et ladite partie du flux liquide enrichi en dioxyde de carbone D dans un échangeur de chaleur de couplage thermique (4).

Selon un mode de réalisation, le procédé est caractérisé en ce qu'une partie du flux liquide récupéré à l'étape d) est soutirée et injectée comme liquide d'alimentation dans la colonne à distiller (7).

Selon un mode de réalisation, le procédé est caractérisé en ce que la détente de l'étape f) est réalisée en plusieurs détentes successives pour conduire à l'obtention de plusieurs flux gazeux enrichis en méthane M1, qui sont ensuite éventuellement chauffés, puis mélangés au flux gazeux enrichi en méthane M2 pour obtenir le flux gazeux enrichi en méthane M.

Selon un mode de réalisation, le procédé est caractérisé en ce que le refroidissement de l'étape c) est réalisé en plusieurs refroidissements successifs avant l'introduction dans l'unité de séparation (5).

Selon un mode de réalisation, le procédé est caractérisé en ce que le flux liquide enrichi en paraffines P est réinjecté dans la colonne à distiller (7).

Selon un mode de réalisation, le procédé est caractérisé en ce que flux gazeux enrichi en méthane M est éventuellement chauffé puis comprimé.

Selon un mode de réalisation, le procédé est caractérisé en ce qu'une partie du flux liquide enrichi en dioxyde de carbone D est injecté dans un réservoir géologique.

Selon un mode de réalisation, le procédé est caractérisé en ce que le gaz naturel G comprend de 35 % à 85 % de dioxyde de carbone, de 15 % à 65 % de méthane et au plus de 4 % de paraffines, en particulier de 40 % à 70 % de dioxyde de carbone, de 30 % à 60 % de méthane et au plus 0,5 % de paraffines.

Selon un mode de réalisation, le procédé est caractérisé en ce que le flux gazeux enrichi en méthane M comprend moins de 22 % de dioxyde de carbone, de préférence moins de 20 % de dioxyde de carbone, plus préférentiellement encore moins de 18 % de dioxyde de carbone.

Selon un mode de réalisation, le procédé est caractérisé en ce que le flux liquide enrichi en dioxyde de carbone D comprend de 60 % à 100 % de dioxyde de carbone, en particulier de 70 % à 90 % de dioxyde de carbone. Le flux liquide enrichi en dioxyde de carbone D peut également comprendre une proportion minoritaire en hydrocarbures dissouts.

Selon un mode de réalisation, le procédé est caractérisé en ce que le flux liquide enrichi en paraffines P comprend de 4 % à 40 % de paraffines, en particulier de 20 % à 30 % de paraffines, plus particulièrement environ 25 % de paraffines.

La présente invention a également pour objet une installation de traitement d'un gaz naturel G comprenant du dioxyde de carbone, du méthane et des paraffines, pour obtenir un flux gazeux enrichi en méthane M, un flux liquide enrichi en dioxyde de carbone D et un flux liquide enrichi en paraffines P, caractérisé en ce qu'elle comprend:
- une colonne de déparaffinage (3),
- une ligne d'entrée (10) connectée en entrée de la colonne de déparaffinage (3) pour introduire le gaz naturel G dans la colonne de déparaffinage (3),
- une ligne de tête de colonne de déparaffinage (11) connectée en haut de la colonne de déparaffinage (3) pour récupérer un flux de vapeur de tête et une ligne de cuve de colonne de déparaffinage (6) connectée en cuve de la colonne de déparaffinage (3) pour récupérer un flux liquide enrichi en paraffines P ,
- une unité de séparation (5) alimentée par la ligne de tête de colonne de déparaffinage (11),
- une ligne de reflux (16) connectée à l'unité de séparation (5) pour récupérer et réinjecter un flux liquide comme liquide d'alimentation en tête de la colonne de déparaffinage (3),
- une ligne de vapeur (12) connectée à l'unité de séparation (5) pour récupérer un flux vapeur,
- un échangeur de chaleur (13) et des détendeurs/séparateurs (34a, 34b) alimentés par la ligne de vapeur (12) pour obtenir un flux condensé FC récupéré dans une ligne de récupération de condensat (40) et un flux gazeux enrichi en méthane M1 récupéré dans une ou plusieurs lignes de récupération de méthane (15a, 15b),
- une colonne à distiller (7) alimentée par la ligne de récupération de condensat (40) comprenant le flux condensé FC,
- une ligne de tête de colonne à distiller (8) connectée en tête de la colonne à distiller (7) pour récupérer un flux gazeux enrichi en méthane M2,
- une ligne de collecte de méthane (14) connectée aux lignes de tête de colonne à distiller (8) et de récupération de méthane (15a, 15b) pour récupérer un flux gazeux enrichi en méthane M, éventuellement via un compresseur (17a, 17b),
- une ligne de cuve de colonne à distiller (9) connectée en cuve de la colonne à distiller (7) pour récupérer un flux liquide enrichi en dioxyde de carbone D,
- une ligne de soutirage (9a) connectée à la ligne de cuve de colonne à distiller (9) pour soutirer et réinjecter une partie du flux liquide enrichi en dioxyde de carbone D dans la colonne à distiller (7),
caractérisée en ce qu'elle comprend en outre un échangeur de chaleur de couplage thermique (4) traversé par les lignes de tête de colonne de déparaffinage (11) et de soutirage (9a) permettant de refroidir le flux de vapeur de tête avant son introduction dans l'unité de séparation (5) tout en réchauffant la partie soutirée du flux liquide enrichi en dioxyde de carbone D avant son injection dans la colonne à distiller (7).

Selon un mode de réalisation, l'installation est caractérisée en ce qu'une ligne d'injection (16a) est connectée à la ligne de reflux (16) pour soutirer une partie du flux liquide et l'injecter comme liquide d'alimentation dans la colonne à distiller (7).

Selon un mode de réalisation, l'installation est caractérisée en ce que le premier échangeur de chaleur (13) est traversé par un groupe frigorifique (18) et par les lignes de vapeur (12), de collecte de méthane (14) et une première ligne de récupération de méthane (15a) pour refroidir le flux vapeur tout en réchauffant les flux gazeux enrichis en méthane M et M1.

Selon un mode de réalisation, l'installation est caractérisée en ce que la ligne de tête de colonne de déparaffinage (11) traverse l'échangeur de chaleur (13) pour refroidir le flux de vapeur de tête après son passage à travers l'échangeur de chaleur de couplage thermique (4) et avant son introduction dans l'unité de séparation (5).

Selon un mode de réalisation, l'installation est caractérisée en ce que la ligne de cuve de colonne de déparaffinage (6) alimente la colonne à distiller (7).

### Brève description des Figures

- la Figure 1 présente un mode de réalisation de l'invention.
- la Figure 2 présente un autre mode de réalisation de l'invention.

### Description détaillée de l'invention

L'invention est maintenant décrite plus en détail et de façon non limitative dans la description qui suit.

Toutes les pressions sont données en valeurs absolues. Tous les pourcentages sont donnés en valeurs molaires sauf mention contraire.

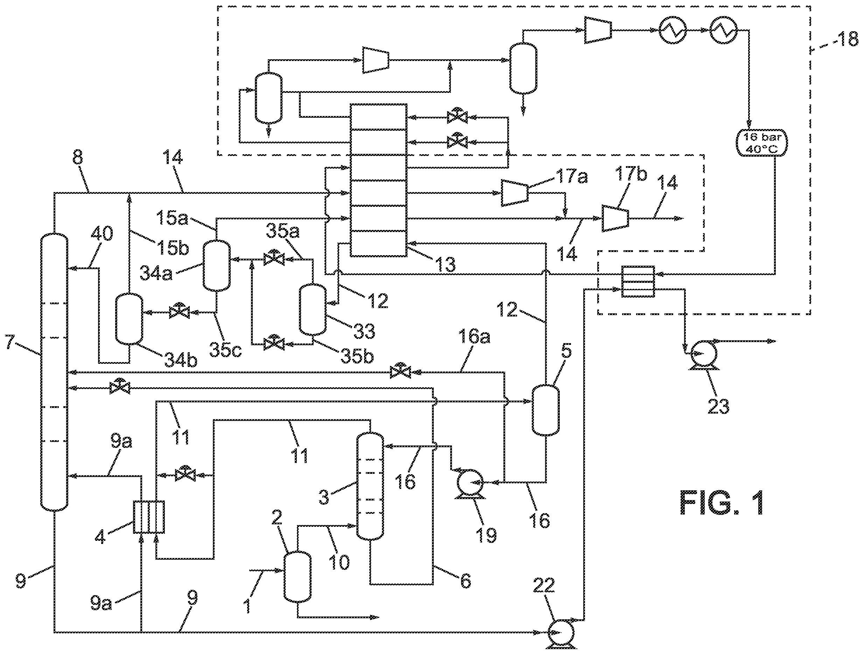

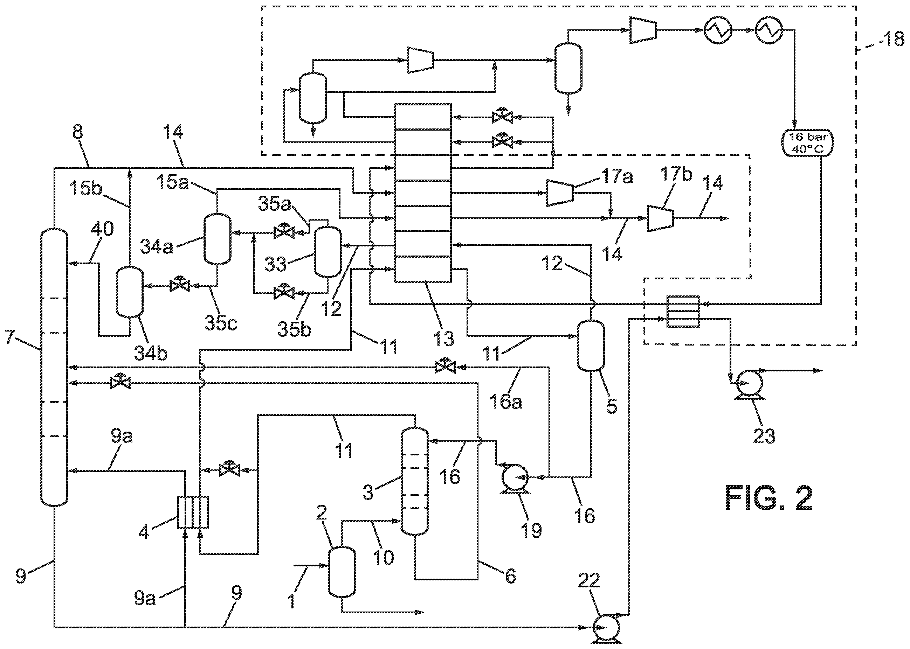

D'abord on s'attachera à décrire l'installation selon l'invention, puis le procédé en faisant référence aux Figures 1 et 2.

### Installation

En faisant référence à la Figure 1, l'installation selon l'invention comprend une ligne d'amenée 1 de gaz naturel G. Cette ligne d'amenée 1 de gaz passe de préférence par une unité de prétraitement 2 qui peut inclure des moyens de séparation gaz/liquide visant à le débarrasser de ses contaminants solides ou liquides, des moyens de pré-refroidissement et/ou des moyens de déshydratation. Une ligne d'entrée 10 est connectée à la sortie de l'unité de pré-traitement 2 pour récupérer le gaz naturel ainsi pré-traité. Cette ligne d'entrée 10 est connectée en entrée d'une colonne de déparaffinage 3 pour introduire le gaz naturel G éventuellement pré-traité dans la colonne de déparaffinage 3.

Par "colonne de déparaffinage", on entend un ensemble de moyens susceptible d'extraire les paraffines du gaz naturel G, en les condensant en tête et en les envoyant en reflux dans la colonne de déparaffinage 3. La condensation des paraffines est obtenue par refroidissement de la tête de colonne de déparaffinage 3.

Par « paraffines », on entend les hydrocarbures susceptibles de cristalliser dans les lignes de l'installation lors de la mise en œuvre du procédé. Ces hydrocarbures sont linéaires, branchés ou cycliques et comprennent typiquement au moins 6 atomes de carbone.

Selon un mode de réalisation particulier, la colonne de déparaffinage 3 est une colonne à distiller et plus précisément, dans le mode de réalisation illustré, il s'agit d'une colonne à distiller classique qui est dépourvue de chauffage en cuve.

La pression opératoire de la colonne de déparaffinage 3 est typiquement comprise entre 60 bar et 80 bar, de préférence entre 65 bar et 75 bar, plus préférentiellement environ 70 bar.

La température opératoire de la tête de colonne de déparaffinage 3 est typiquement comprise entre 0°C et 20°C, de préférence entre 5°C et 15°C, plus préférentiellement entre 10°C et 15°C.

La température de la tête de colonne est déterminée de façon à obtenir un reflux suffisant à l'élimination des paraffines dans le flux vapeur (ligne de vapeur 12) ou assurer un rebouillage suffisant à la colonne à distiller 7, la quantité de chaleur retirée au flux de vapeur de tête (ligne de tête de colonne de déparaffinage 11) la plus grande étant retenue pour la conception.

Une ligne de tête de colonne de déparaffinage 11, connectée en tête de la colonne de déparaffinage 3 permet de récupérer un flux de vapeur de tête, tandis qu'une ligne de cuve de colonne de déparaffinage 6 connectée en cuve de la colonne déparaffinage 3 permet de récupérer un flux liquide enrichi en paraffines P.

La ligne de tête de colonne de déparaffinage 11 traverse un échangeur de chaleur de couplage thermique 4 dans lequel le flux de vapeur de tête est refroidi, partiellement condensé, puis alimente une unité de séparation 5 avec ledit flux.

Selon un mode de réalisation particulier, l'unité de séparation 5 est un séparateur gaz/liquide, par exemple un ballon de reflux.

Une ligne de reflux 16 est connectée en cuve de l'unité de séparation 5 pour récupérer et réinjecter le flux liquide comme liquide de reflux en tête de la colonne déparaffinage 3.

Selon un mode de réalisation particulier, le flux liquide peut être pompé de façon à ce que sa pression soit égale à la pression opératoire de la colonne de déparaffinage 3 avant son injection dans ladite colonne. Comme illustré sur la Figure 1, la ligne de reflux 16 peut donc traverser une pompe 19 pour pomper le flux liquide.

Une ligne de vapeur 12 est connectée en tête de l'unité de séparation 5 pour récupérer un flux vapeur.

La ligne de vapeur 12 alimente un échangeur de chaleur (moyen de refroidissement) 13 et des détendeurs/séparateurs (moyens de détente et de séparation) 34a, 34b montés en cascade pour obtenir un flux condensé FC récupéré dans une ligne de récupération de condensat 40 et un flux gazeux enrichi en méthane M1 récupéré dans des lignes de récupération de méthane 15a et 15b.

Les détendeurs/séparateurs (moyens de détente et de séparation) 34a, 34b peuvent consister en une série de ballons flash montés en cascade pour réaliser des détentes étagées destinées à produire séparément le flux condensé FC et le flux gazeux enrichi en méthane M1.

Un ballon de garde 33 peut être situé entre l'échangeur de chaleur (moyen de refroidissement) 13 et les détendeurs/séparateurs (moyens de détente et de séparation) 34a, 34b.

La Figure 1 illustre le mode de réalisation préférentiel dans lequel l'installation comprend 2 ballons flash 34a, 34b montés en cascade. Plus précisément, la ligne de vapeur 12, après avoir traversé l'échangeur de chaleur (moyen de refroidissement) 13, alimente le ballon de garde 33. En sortie du ballon de garde 33 sont connectées une ligne de récupération de flux gazeux 35a (en tête) et une ligne de récupération de flux liquide 35b (en cuve). En sortie du premier ballon flash 34a sont connectées une première ligne de récupération de méthane 15a de récupération d'un premier flux gazeux enrichi en méthane M1a (en tête) et une ligne de récupération d'un second flux liquide 35c (en cuve), ladite ligne 35c alimentant le second ballon flash 34b. En sortie du second ballon flash 34b sont connectées une seconde ligne de récupération de méthane 15b de récupération d'un premier flux gazeux enrichi en méthane M1b (en tête) et la ligne de récupération de condensat 40 pour récupérer le flux condensé FC (en cuve). La seconde ligne de récupération de méthane 15b est ensuite connectée, avec la ligne de tête de colonne à distiller 8, à la ligne de collecte de méthane 14 pour obtenir le flux gazeux enrichi en méthane M.

Le nombre de ballons flash montés en cascade peut être différent de 3. L'installation peut ainsi comprendre de 1 à 5 ballons flash 34 montés en cascade, en particulier de 2 à 3 ballons flash 34 montés en cascade.

La ligne de récupération de condensat 40 alimente une colonne à distiller 7 avec le flux condensé FC.

Par "colonne à distiller", on entend un ensemble de moyens susceptibles de séparer le dioxyde de carbone du méthane avec une température opérationnelle de tête inférieure ou égale à -30°C, de préférence inférieure à -40 °C, plus préférentiellement encore inférieure à -50 °C.

La pression opératoire de la colonne à distiller 7 est typiquement comprise entre 20 bar et 40 bar, de préférence entre 25 bar et 35 bar, plus préférentiellement entre 27 bar et 33 bar.

La température opératoire de la tête de la colonne à distiller 7 est typiquement comprise entre -40°C et -62 °C, de préférence entre -45 °C et -61 °C, plus préférentiellement entre -48 °C et -60 °C.

Une ligne de tête de colonne à distiller 8 est connectée en tête de la colonne à distiller 7 pour récupérer un flux enrichi en méthane M2.

Une ligne de collecte de méthane 14 est connectée aux lignes de tête de colonne à distiller 8 et de récupération de méthane 15a et 15b pour récupérer un flux gazeux enrichi en méthane M.

Une ligne de cuve de colonne à distiller 9 est connectée en cuve de la colonne à distiller 7 pour récupérer un flux liquide enrichie en dioxyde de carbone D.

Une ligne de soutirage 9a est connectée à la ligne de cuve de colonne à distiller 9 pour soutirer et réinjecter une partie du flux liquide enrichi en dioxyde de carbone D dans la colonne à distiller.

La ligne de soutirage 9a traverse l'échangeur de chaleur de couplage thermique 4 dans lequel la partie soutirée du flux liquide enrichi en dioxyde de carbone D est réchauffée avant son injection dans la colonne à distiller 7.

Dans l'installation selon l'invention, l'échangeur de chaleur de couplage thermique 4 est traversé par les lignes de soutirage 9a et de tête de colonne de déparaffinage 11. L'échangeur de chaleur de couplage thermique 4 permet à la fois de refroidir le flux de tête récupéré en tête de la colonne de déparaffinage avant son introduction dans l'unité de séparation 5, et de réchauffer la partie soutirée du flux liquide enrichi en dioxyde de carbone D avant sont injection dans la colonne à distiller.

De façon avantageuse, l'échangeur de chaleur de couplage thermique 4 assure donc le chauffage en cuve de la colonne à distiller 7 tout en assurant le refroidissement en tête de la colonne de déparaffinage 3.

Selon un mode de réalisation particulier, une ligne d'injection 16a est connectée à la ligne de reflux 16 pour soutirer une partie du flux liquide récupéré en cuve de l'unité de séparation 5 et l'injecter dans la colonne à distiller 7.

Selon un mode de réalisation, l'échangeur de chaleur (moyen de refroidissement) 13 est traversé par un groupe frigorifique 18. Le groupe frigorifique 18 assure ainsi le refroidissement de l'échangeur de chaleur 13.

L'échangeur de chaleur 13 est ainsi traversé par le groupe frigorifique 18 et par les lignes de vapeur 12 et de collecte de méthane 14 pour refroidir le flux vapeur récupéré en tête de l'unité de séparation 5 tout en réchauffant le flux gazeux enrichi en méthane M.

Comme illustré sur la Figure 1, l'échangeur de chaleur 13 peut également être traversé par la première ligne de récupération de méthane 15a pour réchauffer le flux gazeux enrichi en méthane M1, avant que la première ligne de récupération de méthane 15a ne soit connectée à la ligne de collecte de méthane 14.

L'installation peut également comprendre des compresseurs (moyens de compression) 17a et 17b pour comprimer le flux gazeux enrichi en méthane M récupéré dans la ligne de collecte de méthane 14. Comme illustré sur la Figure 1, la première ligne de récupération de méthane 15a peut être connectée à la ligne de collecte de méthane 14 entre les compresseurs 17a et 17b.

Selon un mode de réalisation particulier, la ligne de cuve de colonne de déparaffinage 6 alimente la colonne à distiller 7 avec le flux liquide enrichi en paraffines P.

Selon un mode de réalisation particulier, la ligne de cuve de colonne à distiller 9 réinjecte le flux gazeux enrichi en dioxyde de carbone D dans un réservoir géologique, de préférence le réservoir géologique de provenance du gaz naturel G. Comme illustré par la Figure 1, la ligne de cuve de colonne à distiller 9 peut donc traverser, dans le sens du flux, une première pompe 22 pour pomper ledit flux liquide enrichi en dioxyde de carbone D, un échangeur de chaleur du groupe frigorifique 18 et une seconde pompe 23.

La Figure 2 représente un autre mode de réalisation qui diffère de celui de la Figure 1 en ce que l'échangeur de chaleur 13 est en outre traversé par la ligne de tête de colonne de déparaffinage 11, après que cette dernière ait traversé l'échangeur de chaleur de couplage thermique 4, pour refroidir une deuxième fois le flux de vapeur de tête récupéré en tête de la colonne de déparaffinage 3.

### Procédé

Le procédé selon l'invention s'applique à un gaz naturel G contenant du méthane, une impureté légère et une impureté lourde, l'impureté légère étant le dioxyde de carbone et l'impureté lourde étant des paraffines.

Le procédé selon l'invention est applicable aux gaz naturels destinés à être commercialisés sous forme gazeuse ou liquéfiée.

Le gaz naturel G qui est traité par le procédé selon l'invention comprend, au moins 15 % de méthane ou au moins 25 % de méthane ou au moins 35 % de méthane et jusqu'à 65 % de méthane.

Par ailleurs, ce gaz naturel G comprend au moins 35 % de dioxyde de carbone, au moins 45 % de dioxyde de carbone ou au moins 55 % de dioxyde de carbone ou au moins 65 % de dioxyde de carbone et jusqu'à 85 % de dioxyde de carbone. Le procédé selon l'invention est particulièrement avantageux pour traiter un gaz naturel comprenant entre 40 % et 70 % de dioxyde de carbone. En effet, en dessous de 40 % de dioxyde de carbone, d'autres technologies peuvent paraître plus avantageuses et au-delà de 70 % la faible quantité de dioxyde de carbone récupérable altère la rentabilité du procédé.

Le gaz naturel G contient également de l'éthane et des hydrocarbures de type C3+ (comprenant au moins 3 atomes de carbone), de préférence en une proportion massique supérieure ou égale à 1 % ou à 2 % ou à 3 % ou à 4 % ou à 5 % par rapport au méthane.

Le procédé selon l'invention est maintenant décrit en faisant référence à la Figure 1.

Le gaz naturel G subit éventuellement un ou plusieurs traitements préliminaires dans une unité de prétraitement 2 visant à le débarrasser de ses contaminants solides ou liquides, à le déshydrater et / ou à le pré-refroidir et / ou à réduire sa teneur en sulfure d'hydrogène.

Selon un mode de réalisation particulier, l'unité de prétraitement 2 est un séparateur gaz/liquide, par exemple un ballon de garde.

Selon l'étape a) du procédé de l'invention, le gaz naturel G éventuellement pré-traité est introduit dans une colonne de déparaffinage 3.

Selon l'étape b) du procédé de l'invention, les paraffines sont extraites du gaz naturel G dans la colonne de déparaffinage 3, un flux de vapeur de tête comprenant majoritairement du dioxyde de carbone et du méthane est récupéré en tête de colonne (ligne de tête de colonne de déparaffinage 11) et un flux liquide enrichi en paraffines P est récupéré en cuve de colonne (ligne de cuve de colonne de déparaffinage 6). Selon l'étape c) du procédé de l'invention, le flux de vapeur de tête récupéré à l'étape b) du procédé de l'invention (ligne de tête de colonne de déparaffinage 11) est ensuite refroidi puis introduit dans une unité de séparation 5.

Selon l'étape d) du procédé de l'invention, un flux liquide est récupéré en cuve de l'unité de séparation 5 (ligne de reflux 16) et un flux vapeur est récupéré en tête de l'unité de séparation 5 (ligne de vapeur 12).

La température du flux liquide est inférieure à la température du flux de vapeur de tête de la colonne de déparaffinage 3.

Selon un mode de réalisation, le flux de vapeur récupéré en tête de l'unité de séparation 5 à l'étape d) du procédé de l'invention (ligne de vapeur 12) et les flux en aval ont une température de cristallisation des paraffines inférieures à -60 °C, de préférence inférieure à -65 C°, plus préférentiellement encore inférieure à -70 °C.

Selon l'étape e) du procédé de l'invention, tout ou partie de flux liquide récupéré à l'étape d) du procédé de l'invention (ligne de reflux 16) est introduit comme liquide de reflux en tête de la colonne de déparaffinage 3 pour laver à contre-courant le gaz naturel G introduit à l'étape a) du procédé de l'invention.

De façon avantageuse, l'introduction du flux liquide comme liquide de reflux assure le refroidissement de la tête de colonne de déparaffinage, permettant ainsi une bonne extraction des paraffines qui, du fait de leur moindre volatilité, sont condensées et envoyées en reflux au fond de la colonne de déparaffinage 3 où elle se dissolvent dans le flux liquide enrichi en paraffines P.

Pendant la durée d'exploitation, la colonne de déparaffinage 3 peut avoir à traiter des gaz naturels G dont la teneur en dioxyde de carbone varie de façon importante. Or, plus la teneur en dioxyde de carbone est élevée et plus la quantité de flux liquide récupéré est importante. Si tout le flux liquide était envoyé dans la colonne de déparaffinage 3, cela pourrait conduire à l'engorgement des plateaux de la colonne de déparaffinage 3.

De façon avantageuse, en introduisant tout ou partie du flux liquide dans la colonne de déparaffinage 3, il est possible de faire fonctionner ses plateaux dans leur enveloppe opératoire quelle que soit la teneur en dioxyde de carbone du gaz naturel G, de contrôler la composition du flux de vapeur de tête et, comme il a été constaté, d'améliorer la marge entre la température de cristallisation du flux liquide enrichi en paraffines P et sa température en sortie de la colonne de déparaffinage 3.

La quantité de flux liquide à introduire comme liquide de reflux dans la colonne de déparaffinage 3 peut être calculée par l'homme du métier en utilisant des outils usuels de dimensionnement de procédé.

Selon l'étape f) du procédé de l'invention, le flux vapeur récupéré à l'étape d) du procédé de l'invention (ligne de vapeur 12) est refroidi puis détendu pour obtenir un flux condensé FC (ligne de récupération de condensat 40) et un flux gazeux enrichi en méthane M1 (lignes de récupération de méthane 15a, 15b).

Le refroidissement du flux vapeur peut être réalisé à l'aide d'un échangeur de chaleur 13. Le refroidissement de l'échangeur de chaleur 13 peut être quant à lui assuré par un groupe frigorifique 18 qui le traverse.

De façon avantageuse, la colonne de déparaffinage 3 permet de réduire les concentrations en paraffines dans le flux vapeur récupéré en tête de l'unité de séparation 5, éliminant ainsi les risques de cristallisation desdites paraffines dans l'échangeur de chaleur 13.

Après avoir été refroidi, le flux vapeur (ligne de vapeur 12) subit une détente, par exemple à l'aide de ballons flash 34a, 34b montés en cascade. Le flux gazeux enrichi en méthane M1 est récupéré en tête des ballons flash 34a et 34b, tandis que le flux condensé FC est récupéré en cuve du ballon flash 34b (ligne de récupération de condensat 40).

Selon l'étape g) du procédé de l'invention, le flux condensé FC est introduit dans une colonne à distiller 7, de préférence en tête de colonne, pour récupérer en tête de colonne un flux gazeux enrichi en méthane M2 (ligne de tête de colonne à distiller 8) et en cuve de colonne un flux liquide enrichi en dioxyde de carbone D (ligne de cuve de colonne à distiller 9).

La détente du flux vapeur préalablement refroidi est réalisée de façon à ce que la pression du flux condensé FC soit identique à la pression opératoire de la colonne à distiller 7.

Selon l'étape h) du procédé de l'invention, le flux gazeux enrichi en méthane M1 obtenu à l'étape f) du procédé de l'invention (lignes de récupération de méthane 15a et 15b) et le flux gazeux enrichi en méthane M2 récupéré à l'étape g) du procédé de l'invention (ligne de tête de colonne à distiller 8) sont ensuite mélangés (ligne de collecte de méthane 14) pour obtenir un flux gazeux enrichi en méthane M.

Selon un mode de réalisation, le flux gazeux enrichi en méthane M comprend moins de 22% de dioxyde de carbone, de préférence moins de 20% de dioxyde de carbone, plus préférentiellement moins de 18% de dioxyde de carbone.

Selon un mode de réalisation particulier, le flux liquide enrichi en dioxyde de carbone D comprend de 60% à 100% de dioxyde de carbone, en particulier de 70% à 90% de dioxyde de carbone. Le flux liquide enrichi en dioxyde de carbone D peut également comprendre une proportion minoritaire en hydrocarbures dissouts.

Selon l'étape i) du procédé de l'invention, une partie du flux liquide enrichi en dioxyde de carbone D (ligne de soutirage 9a) est réchauffée et le flux réchauffé ainsi obtenu est introduit dans la colonne à distiller 7.

Le refroidissement du flux de vapeur de tête (ligne de tête de colonne de déparaffinage 11) à l'étape c) du procédé de l'invention et le réchauffement de la partie du flux liquide enrichi en dioxyde de carbone D (ligne de soutirage 9a) à l'étape i) du procédé de l'invention sont réalisés en faisant passer ledit flux de tête et ladite partie du flux liquide enrichi en dioxyde de carbone D dans un échangeur de chaleur de couplage thermique 4.

De façon avantageuse, le réchauffement d'une partie du flux liquide enrichi en dioxyde de carbone D permet d'assurer le chauffage de la cuve de la colonne à distiller 7. Il permet également de limiter les pertes en hydrocarbures dissouts en chassant les hydrocarbures dissouts légers tels que le méthane et l'éthane.

Un couplage thermique est ainsi avantageusement réalisé entre les deux colonnes à distiller 7 et de déparaffinage 3. En effet, grâce à ce couplage thermique la quantité de chaleur retirée du flux de vapeur de tête et transmise à la partie du flux liquide enrichi en dioxyde de carbone D assure le refroidissement de la tête de colonne de déparaffinage 3 et le chauffage de la cuve de la colonne à distiller 7.

Ce couplage thermique est d'autant plus avantageux que les calculs montrent de façon surprenante que la température de cuve de la colonne à distiller 7 est voisine de la température de tête de la colonne de déparaffinage 3. Il est par conséquent possible de déterminer, grâce aux outils usuels de dimensionnement de procédé, les conditions opératoires des deux colonnes pour lesquelles il est possible de transférer la chaleur de la tête de colonne de déparaffinage 3 vers la cuve de colonne à distiller 7 réalisant ainsi une intégration thermique particulièrement profitable.

Ce couplage thermique est également avantageux du point de vue de l'investissement et des coûts opératoires. En effet, si les deux systèmes de chauffage de la colonne à distiller 7 et de reflux de la colonne de déparaffinage 3 étaient indépendants, il faudrait deux échangeurs au lieu d'un. De plus, la température de fonctionnement de l'échangeur de chaleur de couplage thermique 4 étant le plus souvent inférieure à la température ambiante, il faudrait prévoir un groupe frigorifique dont on fait ici l'économie. Enfin, si les systèmes étaient indépendants, il faudrait fournir de la vapeur pour le chauffage de la cuve de la colonne à distiller 7. On voit donc qu'outre des économies d'investissement, ce couplage thermique permet des économies d'énergie, donc de frais opératoires.

Selon un mode de réalisation particulier, la quantité de chaleur échangée dans l'échangeur de chaleur de couplage thermique 4 est comprise entre 10 MW et 30 MW, de préférence entre 15 MW et 25 MW, de façon encore plus préféré entre 19 et 22 MW.

Selon un mode de réalisation particulier, la quantité d'énergie échangée dans l'échangeur de chaleur de couplage thermique 4 est comprise 10 et 60, de préférence entre 20 et 50, de façon encore plus préféré entre 30 et 40 kWh/t_{CO₂ du flux liquide enrichi en dioxyde de carbone D (ligne de cuve de colonne à distiller 9)}.

Selon un mode de réalisation, une partie du flux liquide récupéré à l'étape d) est soutirée (ligne d'injection 16a) et injectée comme liquide d'alimentation dans la colonne à distiller 7.

Grâce au chauffage en cuve de la colonne à distiller 7, le fait d'injecter une partie du flux liquide (ligne de reflux 16) dans la colonne à distiller 7 permet de récupérer avantageusement les hydrocarbures légers, tels que le méthane et l'éthane, présents dans ledit flux liquide. La récupération de ces mêmes hydrocarbures légers dans la colonne de déparaffinage 3 est moins efficace car ladite colonne de déparaffinage 3 est dépourvue de chauffage en cuve.

Selon un mode de réalisation, l'étape f) de détente peut être réalisée en plusieurs détentes successives, notamment à l'aide de plusieurs ballons flash 34 montés en cascade. Ces détentes successives conduisent à l'obtention de plusieurs flux gazeux enrichis en méthane M1 (lignes de récupération de méthane 15a et 15b) qui sont ensuite éventuellement chauffés, puis mélangés au flux gazeux enrichi en méthane M2 (ligne de tête de colonne à distiller 8) pour obtenir le flux gazeux enrichi en méthane M (ligne de collecte de méthane 14).

De façon avantageuse, augmenter le nombre de détentes permet de mieux séparer le flux condensé FC des flux gazeux enrichis en méthane M1 et de principalement réaliser des économies d'énergie lors de la compression en (17a) et (17b). Le nombre de détentes successives à réaliser peuvent être calculé par les techniques de dimensionnement de procédé bien connues de l'homme du métier.

Selon un mode de réalisation préféré, l'étape de détente est réalisée en entre 1 et 5 détentes successives, de préférence en entre 2 et 3 détentes successives, plus préférentiellement en 2 détentes successives.

La Figure 1 illustre le mode de réalisation préférentiel dans lequel l'étape de détente est réalisée en deux (2) détentes successives, conduisant ainsi à l'obtention de plusieurs flux gazeux enrichis en méthane M1a et M1b qui sont ensuite éventuellement chauffés, puis mélangés au flux gazeux enrichi en méthane M2 pour obtenir le flux gazeux enrichi en méthane M. Dans ce mode de réalisation, le flux vapeur récupéré en tête de l'unité de séparation 5 est refroidi dans l'échangeur de chaleur 13, puis introduit dans un ballon de garde 33 . Un flux gazeux est récupéré en tête (ligne de récupération de flux gazeux 35a), tandis qu'un flux liquide est récupéré en cuve (ligne de récupération de flux liquide 35b). Un premier flux gazeux enrichi en méthane M1a est récupéré en tête du ballon flash 34a (première ligne de récupération de méthane 15a), tandis qu'un second flux liquide est récupéré en cuve du ballon flash 34a (ligne de récupération d'un second flux gazeux 35c) et alimente un second ballon flash 34b. Un second flux gazeux enrichi en méthane M1b est récupéré en tête (seconde ligne de récupération de méthane 15b) et le flux condensé FC est récupéré en cuve du second ballon flash 34b (ligne de récupération de condensat 40), puis est injecté dans la colonne à distiller 7. Le second flux gazeux enrichi en méthane M1b est mélangé au flux gazeux enrichi en méthane M2 pour obtenir le flux gazeux enrichi en méthane M (ligne de collecte de méthane 14). Enfin, les flux gazeux enrichis en méthane M et M1a sont chauffés à l'aide de l'échangeur de chaleur 13 avant d'être mélangés. Dans le mode de réalisation illustré, le flux enrichi en méthane M est comprimé à l'aide d'un compresseur 17a après avoir été chauffé mais avant son mélange.

Selon un mode de réalisation particulier, le refroidissement de l'étape c) peut être réalisé en plusieurs refroidissements successifs avant l'introduction dans l'unité de séparation 5.

Pour que le couplage thermique réalisé par l'échangeur de chaleur de couplage thermique 4 fonctionne correctement il faut qu'il y ait adéquation entre les besoins en refroidissement en tête de la colonne de déparaffinage 3 et ceux de chauffage en cuve de la colonne à distiller 7.

Ainsi, au-delà d'une certaine teneur en dioxyde de carbone dans le gaz naturel G, la quantité de flux liquide récupéré en cuve de l'unité de séparation 5 pour assurer le reflux de la colonne de déparaffinage 3 nécessite une quantité de chaleur échangée dans l'échangeur de chaleur de couplage thermique 4 excédant les besoins de chauffage en cuve de la colonne à distiller 7.

De même, si la température d'introduction du gaz naturel G dans la colonne de déparaffinage 3 est particulièrement élevée, par exemple dans des pays tropicaux, la quantité de flux liquide récupéré en cuve de l'unité de séparation 5 et soutirée pour être injectée comme liquide d'alimentation dans la colonne à distiller 7 nécessite une quantité de chaleur échangée dans l'échangeur de chaleur de couplage thermique 4 excédant les besoins de chauffage en cuve de la colonne à distiller 7.

Selon un mode de réalisation particulier, l'étape c) de refroidissement du flux de vapeur de tête récupéré en sortie de la colonne de déparaffinage 3 peut être réalisée en 2 refroidissements successifs.

La Figure 2 illustre un deuxième mode de réalisation. Dans ce mode de réalisation, le premier refroidissement est réalisé à l'aide de l'échangeur de chaleur de couplage thermique 4. Le second refroidissement est réalisé à l'aide de l'échangeur de chaleur 13, les besoins de refroidissement supplémentaires étant couverts par le groupe frigorifique 18.

Selon un mode de réalisation particulier, le flux gazeux enrichi en dioxyde de carbone D est injecté dans un réservoir géologique, de préférence le réservoir géologique de provenance du gaz naturel G.

De façon avantageuse, injecter le flux gazeux enrichi en dioxyde de carbone D dans le réservoir géologique de provenance du gaz naturel G permet de maintenir la pression dudit réservoir et ainsi augmente la quantité de gaz naturel G extrait dudit réservoir.

Selon un mode de réalisation particulier, le flux liquide enrichi en paraffines P (ligne de cuve de colonne de déparaffinage 6) peut être injecté dans la colonne à distiller 7.

Si le flux liquide enrichi en paraffines P n'est pas récupéré comme produit valorisable, il peut être réinjecté avec le flux gazeux enrichi en dioxyde de carbone D dans un réservoir géologique, de préférence le réservoir géologique de provenance du gaz naturel G. Cependant, cela nécessite alors une pompe spécifique pour la porter à haute pression. En injectant le flux liquide enrichi en paraffines P dans la colonne à distiller 7, cela permet avantageusement de recueillir en même temps le flux liquide enrichi en paraffines P et le flux liquide enrichi en dioxyde de carbone D en cuve de la colonne à distiller 7, faisant ainsi l'économie de la pompe.

### Exemples

### Exemple 1 :

L'exemple se réfère au mode de réalisation de l'invention dans lequel le refroidissement du flux de vapeur de tête récupéré dans la ligne de tête de colonne de déparaffinage (11) est réalisé en une seule étape, grâce à l'échangeur de chaleur de couplage thermique (4) et une partie du flux liquide récupéré dans la ligne de reflux (16) est envoyé dans la colonne de déparaffinage 3 et l'autre partie récupérée dans la ligne d'injection (16a) est envoyée dans la colonne à distiller 7.

Le gaz naturel G de la ligne d'entrée (10), dont la composition est indiquée dans le tableau 1, alimente la colonne de déparaffinage (3) à la pression de 70 bars et 19 °C.

Le flux de vapeur de tête de colonne récupéré dans la ligne de tête de colonne de déparaffinage (11) traverse l'échangeur de chaleur de couplage thermique (4) où il est partiellement condensé à la température de 0 °C (24 %). Le flux liquide et le flux vapeur sont séparés dans l'unité de séparation (5) et récupérés respectivement dans la ligne de reflux (16) et la ligne de vapeur (12). Le flux liquide est retourné en partie (42 %) comme liquide de reflux en tête de la colonne de déparaffinage (3), tandis qu'une partie est soutirée, dans la ligne d'injection (16a), et est envoyée comme liquide d'alimentation dans la colonne à distiller (7) (58 %). Le liquide de reflux absorbe les paraffines et est extrait de la colonne de déparaffinage (3) grâce à la ligne de cuve de colonne de déparaffinage (6).

Le tableau 1 donne le bilan matière de la colonne de déparaffinage (3).

**Tableau 1**

| fraction molaire | Ligne (6) | Ligne (10) | Ligne (11) | Ligne (12) | Ligne (16a) | Ligne (16) |
|---|---|---|---|---|---|---|
| Débit (kmole/h) | 670 | 32000 | 34891 | 26501 | 4816 | 3562 |
| T (°C) | 18,7 | 19,0 | 13,4 | -0,2 | -0,2 | -0,2 |
| P (°C bar a) | 70,0 | 70,0 | 69,9 | 69,4 | 69,4 | 69,4 |
| N2 | 0,0006 | 0,0030 | 0,0029 | 0,0034 | 0,0011 | 0,0011 |
| CO2 | 0,4300 | 0,4785 | 0,4867 | 0,4668 | 0,5496 | 0,5496 |
| H2S | 0,0003 | 0,0002 | 0,0002 | 0,0002 | 0,0002 | 0,0002 |
| METHANE | 0,1791 | 0,4024 | 0,3913 | 0,4357 | 0,2511 | 0,2511 |
| ETHANE | 0,0680 | 0,0541 | 0,0550 | 0,0515 | 0,0662 | 0,0662 |
| PROPANE | 0,0949 | 0,0360 | 0,0381 | 0,0288 | 0,0677 | 0,0677 |
| IBUTANE | 0,0272 | 0,0060 | 0,0065 | 0,0039 | 0,0144 | 0,0144 |
| BUTANE | 0,0646 | 0,0120 | 0,0129 | 0,0074 | 0,0302 | 0,0302 |
| IPENTANE | 0,0190 | 0,0020 | 0,0021 | 0,0009 | 0,0058 | 0,0058 |
| PENTANE | 0,0355 | 0,0030 | 0,0030 | 0,0011 | 0,0087 | 0,0087 |
| C6 | 0,0502 | 0,0020 | 0,0013 | 0,0003 | 0,0045 | 0,0045 |
| Benzène | 0,0028 | 0,0001 | 0,0001 | 0,0000 | 0,0002 | 0,0002 |
| C7 | 0,0185 | 0,0004 | 0,0001 | 0,0000 | 0,0003 | 0,0003 |
| C8 | 0,0066 | 0,0001 | 0,0000 | 0,0000 | 0,0000 | 0,0000 |
| C9 | 0,0024 | 0,0001 | 0,0000 | 0,0000 | 0,0000 | 0,0000 |
| C10 | 0,0006 | 0,0000 | 0,0000 | 0,0000 | 0,0000 | 0,0000 |

On voit sur le tableau 1 que les concentrations en paraffines sont considérablement réduites dans le flux vapeur de la ligne de vapeur (12) réduisant ainsi les risques de cristallisation dans les équipements aval cryogéniques.

La ligne de vapeur (12) traverse l'échangeur de chaleur (13) où le flux vapeur récupéré est refroidi et condensé à la température de -36°C. Le liquide ainsi obtenu est détendu en deux étapes (38 et 28,4 bars) jusqu'à la pression opératoire de la colonne à distiller (7) de 28,4 bars et permet l'obtention, d'un flux condensé FC et de deux flux gazeux enrichis en méthane M1a et M1b récupéré dans deux lignes de récupération de méthane (15a et 15b). Le flux condensé FC est introduit en tête de la colonne à distiller (7) dont il assure le reflux à-58 °C.

Un flux riche en méthane M2 est récupéré en tête dans la ligne de tête de colonne à distiller (8), tandis qu'un flux liquide enrichi en dioxyde de carbone D est récupéré en cuve dans la ligne de cuve de colonne à distiller (9).

Les flux gazeux riches en méthane M2 et M1b sont mélangés pour obtenir un flux gazeux riche en méthane M dans la ligne de collecte de méthane (14).

Le chauffage en cuve par l'échangeur de chaleur de couplage thermique (4) d'une partie du flux liquide enrichi en dioxyde de carbone D récupéré dans la ligne de cuve de colonne à distiller (9) permet de séparer du dioxyde de carbone l'essentiel des hydrocarbures légers dissouts et de les récupérer dans le flux gazeux enrichi en méthane M2.

La chaleur extraite du flux de vapeur de tête de la ligne de tête de colonne de déparaffinage (11) dans l'échangeur de chaleur de couplage thermique (4) est utilisée pour le chauffage d'une partie du flux liquide enrichi en dioxyde de carbone récupéré D et donc de la cuve de la colonne à distiller (7), réalisant ainsi le couplage thermique selon l'invention. La quantité de chaleur échangée est 20,4 MW.

Si le couplage thermique n'était pas réalisé, il faudrait fournir cette chaleur à la colonne à distiller (7) et refroidir d'autant la tête de la colonne (3) au moyen d'un groupe frigorifique qui consommerait environ 5 MW électrique. L'ensemble de ces consommations augmenterait l'autoconsommation en hydrocarbures de l'usine de 0.8 %, réduisant les ventes d'autant.

Le tableau 2 montre le bilan matière de la colonne à distiller (7).

**Tableau 2**

| fraction molaire | Ligne (6) | Ligne (8) | Ligne (9) | Ligne (12) | Ligne (14) | Ligne (15a) | Ligne (16a) |
|---|---|---|---|---|---|---|---|
| Débit (kmole/h) | 670 | 6395 | 15148 | 26501 | 8514 | 8339 | 4819 |
| T (°C) | 18,75 | -57,4 | -7,0 | -0,2 | -57,6 | -51,3 | -0,2 |
| P (bar a) | 70,0 | 28,7 | 28,8 | 69,4 | 28,4 | 38,0 | 69,4 |
| N2 | 0,0006 | 0,0021 | 0,0000 | 0,0034 | 0,0030 | 0,0084 | 0,0011 |
| CO2 | 0,4300 | 0,1992 | 0,7872 | 0,4668 | 0,1981 | 0,2041 | 0,5496 |
| H2S | 0,0003 | 0,0000 | 0,0003 | 0,0002 | 0,0000 | 0,0000 | 0,0002 |
| METHANE | 0,1791 | 0,7640 | 0,0050 | 0,4357 | 0,7644 | 0,7548 | 0,2511 |
| ETHANE | 0,0680 | 0,0298 | 0,0825 | 0,0515 | 0,0296 | 0,0273 | 0,0662 |
| PROPANE | 0,0949 | 0,0043 | 0,0712 | 0,0288 | 0,0043 | 0,0046 | 0,0677 |
| IBUTANE | 0,0272 | 0,0002 | 0,0124 | 0,0039 | 0,0002 | 0,0002 | 0,0144 |
| BUTANE | 0,0646 | 0,0003 | 0,0250 | 0,0074 | 0,0003 | 0,0004 | 0,0302 |
| IPENTANE | 0,0190 | 0,0000 | 0,0042 | 0,0009 | 0,0000 | 0,0000 | 0,0058 |
| PENTANE | 0,0355 | 0,0000 | 0,0063 | 0,0011 | 0,0000 | 0,0000 | 0,0087 |
| C6 | 0,0502 | 0,0000 | 0,0042 | 0,0003 | 0,0000 | 0,0000 | 0,0045 |
| Benzène | 0,0028 | 0,0000 | 0,0002 | 0,0000 | 0,0000 | 0,0000 | 0,0002 |
| C7 | 0,0185 | 0,0000 | 0,0009 | 0,0000 | 0,0000 | 0,0000 | 0,0003 |
| C8 | 0,0066 | 0,0000 | 0,0003 | 0,0000 | 0,0000 | 0,0000 | 0,0000 |
| C9 | 0,0024 | 0,0000 | 0,0001 | 0,0000 | 0,0000 | 0,0000 | 0,0000 |
| C10 | 0,0006 | 0,0000 | 0,0000 | 0,0000 | 0,0000 | 0,0000 | 0,0000 |

### Exemple 2

L'exemple 2 se rapporte à la variante de l'invention telle qu'illustrée par la Figure 2.

Le gaz naturel G de la ligne d'entrée (10), dont la composition est indiquée dans le tableau 3, alimente la colonne de déparaffinage (3) à la pression de 68 bars et 40 °C.

Le flux de vapeur de tête de colonne récupéré dans la ligne de tête de colonne de déparaffinage (11) traverse l'échangeur de chaleur de couplage thermique (4) où il est partiellement condensé (27 %) à la température de 3,2 °C. La teneur en dioxyde de carbone dans le gaz G étant importante, les quantités condensées sont grandes. La quantité de chaleur à extraire du flux de la ligne de tête de colonne de déparaffinage (11) excède les besoins en chauffage de la colonne à distiller (7) et est partiellement extraite dans l'échangeur de chaleur (13). De cette façon, est atteint le reflux nécessaire au déparaffinage dans la colonne de déparaffinage (3).

Le flux liquide et le flux vapeur sont séparés dans l'unité de séparation (5) ; et récupérés respectivement dans la ligne de reflux (16) et la ligne de vapeur (12). Le flux liquide est retourné en partie (70 %) comme liquide de reflux en tête de la colonne de déparaffinage (3), tandis qu'une partie est soutirée, dans la ligne d'injection (16a), et envoyée comme liquide d'alimentation dans la colonne à distiller (7) (30 %). Le liquide de reflux absorbe les paraffines et est extrait de la colonne de déparaffinage (3) grâce à la ligne de cuve de colonne de déparaffinage (6).

Le tableau 3 donne le bilan matière de la colonne de déparaffinage (3).

**Tableau 3**

| Fraction molaire | Ligne (6) | Ligne (10) | Ligne (11) | Ligne (12) | Ligne (16a) | Ligne (16) | Ligne 11 après l'échangeur de chaleur de couplage thermique (4) et avant l'échangeur de chaleur (13) | Ligne 11 après l'échangeur de chaleur (13) |
|---|---|---|---|---|---|---|---|---|
| Débit (kmole/h) | 201 | 33964 | 46263 | 28330 | 5432 | 12500 | 46263 | 46263 |
| T (°C) | 34,9 | 40 | 10 | 0 | 0 | 0 | 4.2 | 0 |
| P (bar a) | 68 | 68 | 67,9 | 66,9 | 67 | 67 | 67,4 | 66.9 |
| N2 | 0,0110 | 0,0927 | 0,0752 | 0,1059 | 0,0266 | 0,0266 | 0,0752 | 0,0752 |
| CO2 | 0,4487 | 0,6326 | 0,6741 | 0,6051 | 0,7832 | 0,7832 | 0,6741 | 0,6741 |
| H2S | 0,0017 | 0,0012 | 0,0014 | 0,0011 | 0,0018 | 0,0018 | 0,0014 | 0,0014 |
| METHANE | 0,0734 | 0,2234 | 0,1938 | 0,2458 | 0,1117 | 0,1117 | 0,1938 | 0,1938 |
| ETHANE | 0,0283 | 0,0251 | 0,0256 | 0,0248 | 0,0267 | 0,0267 | 0,0256 | 0,0256 |
| PROPANE | 0,0357 | 0,0135 | 0,0162 | 0,0113 | 0,0238 | 0,0238 | 0,0162 | 0,0162 |
| IBUTANE | 0,0116 | 0,0021 | 0,0029 | 0,0015 | 0,0050 | 0,0050 | 0,0029 | 0,0029 |
| BUTANE | 0,0327 | 0,0045 | 0,0063 | 0,0030 | 0,0113 | 0,0113 | 0,0063 | 0,0063 |
| IPENTANE | 0,0344 | 0,0016 | 0,0023 | 0,0008 | 0,0048 | 0,0048 | 0,0023 | 0,0023 |
| PENTANE | 0,0482 | 0,0014 | 0,0019 | 0,0005 | 0,0040 | 0,0040 | 0,0019 | 0,0019 |
| C6 | 0,1615 | 0,0011 | 0,0004 | 0,0001 | 0,0009 | 0,0009 | 0,0004 | 0,0004 |
| Benzène | 0,0139 | 0,0001 | 0,0000 | 0,0000 | 0,0000 | 0,0000 | 0,0000 | 0,0000 |
| C7 | 0,0687 | 0,0004 | 0,0000 | 0,0000 | 0,0000 | 0,0000 | 0,0000 | 0,0000 |
| C8 | 0,0220 | 0,0001 | 0,0000 | 0,0000 | 0,0000 | 0,0000 | 0,0000 | 0,0000 |
| C9 | 0,0068 | 0,0000 | 0,0000 | 0,0000 | 0,0000 | 0,0000 | 0,0000 | 0,0000 |
| C10 | 0,0017 | 0,0000 | 0,0000 | 0,0000 | 0,0000 | 0,0000 | 0,0000 | 0,0000 |

On voit à nouveau sur le tableau 3 que les concentrations en paraffines sont considérablement réduites dans le flux vapeur de la ligne de vapeur (12) réduisant ainsi les risques de cristallisation dans les équipements aval cryogéniques.

Comme dans l'exemple 1, la chaleur extraite du flux de vapeur de tête de la ligne de tête de colonne de déparaffinage (11) dans l'échangeur de chaleur de couplage thermique (4) est utilisée pour le chauffage d'une partie du flux liquide enrichi en dioxyde de carbone D avant son introduction dans la colonne à distiller (7), réalisant ainsi le couplage thermique selon l'invention. La quantité de chaleur échangée est 20,1 MW, proche des 20.4 MW de le mode principal de réalisation.

La charge thermique additionnelle due au passage du flux de vapeur de tête de la ligne de tête de colonne de déparaffinage (11) dans l'échangeur de chaleur (13) est de 14,6 MW.

La ligne de vapeur (12) traverse l'échangeur de chaleur (13) où le flux vapeur récupéré est refroidi et condensé à la température de -37°C. Le liquide ainsi obtenu est détendu en deux étapes (38 et 32,4 bar) jusqu'à la pression opératoire de la colonne à distiller (7) de 32,4 bar à -48 °C.

Le tableau 4 montre le bilan matière de la colonne à distiller (7).

**Tableau 4**

| mole fraction | Ligne (8) | Ligne (9) | Ligne (12) | Ligne (14) | Ligne (15) | Ligne (16a) |
|---|---|---|---|---|---|---|
| Débit (kmole/h) | 3905 | 18643 | 28330 | 4458 | 10661 | 5432 |
| T (°C) | -45,5 | -3,5 | 0 | -45,8 | -46,6 | 0 |
| P (bar a) | 32,4 | 32,8 | 66,9 | 32,4 | 38 | 66,9 |
| N2 | 0,1011 | 0,0000 | 0,1059 | 0,1148 | 0,2470 | 0,0266 |
| CO2 | 0,2989 | 0,9268 | 0,6051 | 0,2961 | 0,2625 | 0,7832 |
| H2S | 0,0004 | 0,0019 | 0,0011 | 0,0004 | 0,0004 | 0,0018 |
| METHANE | 0,5731 | 0,0050 | 0,2458 | 0,5623 | 0,4663 | 0,1117 |
| ETHANE | 0,0225 | 0,0287 | 0,0248 | 0,0224 | 0,0201 | 0,0267 |
| PROPANE | 0,0035 | 0,0215 | 0,0113 | 0,0034 | 0,0032 | 0,0238 |
| IBUTANE | 0,0002 | 0,0036 | 0,0015 | 0,0002 | 0,0002 | 0,0050 |
| BUTANE | 0,0003 | 0,0077 | 0,0030 | 0,0003 | 0,0003 | 0,0113 |
| IPENTANE | 0,0000 | 0,0025 | 0,0008 | 0,0000 | 0,0000 | 0,0048 |
| PENTANE | 0,0000 | 0,0020 | 0,0005 | 0,0000 | 0,0000 | 0,0040 |
| C6 | 0,0000 | 0,0003 | 0,0001 | 0,0000 | 0,0000 | 0,0009 |
| Benzène | 0,0000 | 0,0000 | 0,0000 | 0,0000 | 0,0000 | 0,0000 |
| C7 | 0,0000 | 0,0000 | 0,0000 | 0,0000 | 0,0000 | 0,0000 |
| C8 | 0,0000 | 0,0000 | 0,0000 | 0,0000 | 0,0000 | 0,0000 |
| C9 | 0,0000 | 0,0000 | 0,0000 | 0,0000 | 0,0000 | 0,0000 |
| C10 | 0,0000 | 0,0000 | 0,0000 | 0,0000 | 0,0000 | 0,0000 |

## Revendications

1. Procédé de traitement d'un gaz naturel G comprenant du dioxyde de carbone, du méthane et des paraffines, pour obtenir un flux gazeux enrichi en méthane M, un flux liquide enrichi en dioxyde de carbone D et un flux liquide enrichi en paraffines P, ledit procédé comprenant les étapes suivantes:
a) introduction du gaz naturel G dans une colonne de déparaffinage (3),
b) extraction des paraffines du gaz naturel G dans la colonne de déparaffinage (3), et récupération d'un flux de vapeur de tête comprenant du dioxyde de carbone et du méthane, en tête de colonne, et dudit flux liquide enrichi en paraffines P en cuve de colonne,
c) refroidissement du flux de vapeur de tête puis introduction dans une unité de séparation (5),
d) récupération d'un flux liquide et d'un flux vapeur,
e) introduction de tout ou partie du flux liquide comme liquide de reflux en tête de la colonne de déparaffinage (3) pour laver à contre-courant le gaz naturel G introduit à l'étape a),
f) refroidissement puis détente du flux vapeur récupéré à l'étape d) pour obtenir un flux condensé FC et un flux gazeux enrichi en méthane M1,
g) introduction du flux condensé FC dans une colonne à distiller (7) pour récupérer en haut de colonne un flux gazeux enrichi en méthane M2 et en cuve de colonne ledit flux liquide enrichi en dioxyde de carbone D,
h) mélange du flux gazeux enrichi en méthane M1 et du flux gazeux enrichi en méthane M2 pour obtenir ledit flux gazeux enrichi en méthane M,
i) réchauffement d'une partie du flux liquide enrichi en dioxyde de carbone D et introduction du flux réchauffé ainsi obtenu dans la colonne à distiller (7),
dans lequel le refroidissement du flux de vapeur de tête à l'étape c) et le réchauffement de la partie du flux liquide enrichi en dioxyde de carbone D à l'étape i) sont réalisés en faisant passer ledit flux de vapeur de tête et ladite partie du flux liquide enrichi en dioxyde de carbone D dans un échangeur de chaleur de couplage thermique (4).

2. Procédé selon la revendication 1, **caractérisé en ce qu'**une partie du flux liquide récupéré à l'étape d) est soutirée et injectée comme liquide d'alimentation dans la colonne à distiller (7).

3. Procédé selon les revendications 1 ou 2, **caractérisé en ce que** la détente de l'étape f) est réalisée en plusieurs détentes successives pour conduire à l'obtention de plusieurs flux gazeux enrichis en méthane M1, qui sont ensuite éventuellement chauffés, puis mélangés au flux gazeux enrichi en méthane M2 pour obtenir le flux gazeux enrichi en méthane M.

4. Procédé selon l'une quelconque des revendications 1 à 3, **caractérisé en ce que** le refroidissement de l'étape c) est réalisé en plusieurs refroidissements successifs avant l'introduction dans l'unité de séparation (5).

5. Procédé selon l'une quelconque des revendications 1 à 4, **caractérisé en ce que** le flux liquide enrichi en paraffines P est réinjecté dans la colonne à distiller (7).

6. Procédé selon l'une quelconque des revendications 1 à 5, **caractérisé en ce que** flux gazeux enrichi en méthane M est chauffé puis comprimé.

7. Procédé selon l'une quelconque des revendications 1 à 6, **caractérisé en ce qu'**une partie du flux liquide enrichi en dioxyde de carbone D est injecté dans un réservoir géologique.

8. Procédé selon l'une quelconque des revendications 1 à 7, **caractérisé en ce que** le gaz naturel G comprend de 35 % à 85 % de dioxyde de carbone, de 15 % à 65 % de méthane et au plus de 4 % de paraffines, en particulier de 40 % à 70 % de dioxyde de carbone, de 30 % à 60 % de méthane et au plus 0,5 % de paraffines, les pourcentages étant donnés en valeurs molaires.

9. Procédé selon l'une quelconque des revendications 1 à 8, **caractérisé en ce que** le flux gazeux enrichi en méthane M comprend moins de 22 % de dioxyde de carbone, de préférence moins de 20 % de dioxyde de carbone, plus préférentiellement moins de 18 % de dioxyde de carbone, les pourcentages étant donnés en valeurs molaires.

10. Procédé selon l'une quelconque des revendications 1 à 9, **caractérisé en ce que** le flux liquide enrichi en dioxyde de carbone D comprend de 60 % à 100 % de dioxyde de carbone, en particulier de 70 % à 90 % de dioxyde de carbone, les pourcentages étant donnés en valeurs molaires.

11. Procédé selon l'une quelconque des revendications 1 à 10, **caractérisé en ce que** le flux liquide enrichi en paraffines P comprend de 4 % à 40 % de paraffines, en particulier de 20 % à 30 % de paraffines, plus particulièrement environ 25 % de paraffines, les pourcentages étant donnés en valeurs molaires.

12. Installation de traitement d'un gaz naturel G comprenant du dioxyde de carbone, du méthane et des paraffines, pour obtenir un flux gazeux enrichi en méthane M, un flux liquide enrichi en dioxyde de carbone D et un flux liquide enrichi en paraffines P, **caractérisé en ce qu'**elle comprend:
- une colonne de déparaffinage (3),
- une ligne d'entrée (10) connectée en entrée de la colonne de déparaffinage (3) pour introduire le gaz naturel G dans la colonne de déparaffinage (3),
- une ligne de tête de colonne de déparaffinage (11) connectée en haut de la colonne de déparaffinage (3) pour récupérer un flux de vapeur de tête et une ligne de cuve de colonne de déparaffinage (6) connectée en cuve de la colonne de déparaffinage (3) pour récupérer un flux liquide enrichi en paraffines P ,
- une unité de séparation (5) alimentée par la ligne de tête de colonne de déparaffinage (11),
- une ligne de reflux (16) connectée à l'unité de séparation (5) pour récupérer et réinjecter un flux liquide comme liquide de reflux en tête de la colonne de déparaffinage (3),
- une ligne de vapeur (12) connectée à l'unité de séparation (5) pour récupérer un flux vapeur,
- un échangeur de chaleur (13) et des détendeurs/séparateurs (34a, 34b) alimentés par la ligne de vapeur (12) pour obtenir un flux condensé FC récupéré dans une ligne de récupération de condensat (40) et un flux gazeux enrichi en méthane M1 récupéré dans une ligne de récupération de méthane (15a, 15b),
- une colonne à distiller (7) alimentée par la ligne de récupération de condensat (40),
- une ligne tête de colonne à distiller (8) connectée en tête de la colonne à distiller (7) pour récupérer un flux gazeux enrichi en méthane M2,
- une ligne de collecte de méthane (14) connectée aux lignes de tête de colonne à distiller (8) et de récupération de méthane (15a, 15b) pour récupérer un flux gazeux enrichi en méthane M, éventuellement via un compresseur (17a, 17b),
- une ligne de cuve de colonne à distiller (9) connectée en cuve de la colonne à distiller (7) pour récupérer un flux liquide enrichi en dioxyde de carbone D,
- une ligne de soutirage (9a) connectée à la ligne de cuve de colonne à distiller (9) pour soutirer et réinjecter une partie du flux liquide enrichi en dioxyde de carbone D dans la colonne à distiller (7),
**caractérisée en ce qu'**elle comprend en outre un échangeur de chaleur de couplage thermique (4) traversé par la ligne de tête de colonne de déparaffinage (11) la ligne de soutirage (9a) permettant de refroidir le flux de vapeur de tête avant son introduction dans l'unité de séparation (5) tout en réchauffant la partie soutirée du flux liquide enrichi en dioxyde de carbone D avant son injection dans la colonne à distiller (7).

13. Installation selon la revendication 12, **caractérisée en ce qu'**une ligne d'injection (16a) est connectée à la ligne de reflux (16) pour soutirer une partie du flux liquide de reflux et l'injecter comme liquide d'alimentation dans la colonne à distiller (7).

14. Installation selon les revendications 12 ou 13, **caractérisée en ce que** l'échangeur de chaleur (13) est traversé par un groupe frigorifique (18) et par les lignes de vapeur (12), de collecte de méthane (14) et une première ligne de récupération de méthane (15a) pour refroidir le flux vapeur tout en réchauffant les flux gazeux enrichis en méthane M et M1.

15. Installation selon l'une quelconque des revendications 12 à 14, **caractérisée en ce que** la ligne de tête de colonne de déparaffinage (11) traverse l'échangeur de chaleur (13) pour refroidir le flux de vapeur de tête après son passage à travers l'échangeur de chaleur de couplage thermique (4) et avant son introduction dans l'unité de séparation (5).

16. Installation selon l'une quelconque des revendications 12 à 15, **caractérisé en ce que** la ligne de cuve de colonne de déparaffinage (6) alimente la colonne à distiller (7).

## Patentansprüche

1. Verfahren zur Behandlung eines Erdgases G, das Kohlendioxid, Methan und Paraffine umfasst, um einen mit Methan angereicherten Gasstrom M, einen mit Kohlendioxid angereicherten Flüssigkeitsstrom D und einen mit Paraffinen angereicherten Flüssigkeitsstrom P zu erhalten, wobei das Verfahren die folgenden Schritte umfasst:
a) Einleiten von Erdgas G in eine Entparaffinierungssäule (3),
b) Extrahieren der Paraffine aus dem Erdgas G in der Entparaffinierungssäule (3) und Gewinnen eines Kohlendioxid und Methan enthaltenden Kopfdampfstroms, oben an der Säule und des mit Paraffinen angereicherten Flüssigkeitsstroms P am Boden der Säule,
c) Abkühlen des Kopfdampfstroms und anschließendes Einleiten desselben in eine Trenneinheit (5),
d) Gewinnen eines Flüssigkeitsstroms und eines Dampfstroms,
e) Einleiten des gesamten oder eines Teils des Flüssigkeitsstroms als Rückflussflüssigkeit am Kopf der Entparaffinierungssäule (3) zum Rückspülen des in Schritt a) eingeleiteten Erdgases G,
f) Abkühlen und dann Entspannen des in Schritt d) gewonnenen Dampfstroms, um einen kondensierten Strom FC und einen mit Methan angereicherten Gasstrom M1 zu erhalten,
g) Einleiten des kondensierten Stroms FC in eine Destillationssäule (7), um oben an der Säule einen mit Methan angereicherten Gasstrom M2 und am Boden der Säule den mit Kohlendioxid angereicherten Flüssigkeitsstrom D zu gewinnen,
h) Mischen des mit Methan angereicherten Gasstroms M1 und des mit Methan angereicherten Gasstroms M2, um den mit Methan angereicherten Gasstrom M zu erhalten,
i) Erwärmen eines Teils des mit Kohlendioxid angereicherten Flüssigkeitsstroms und Einleiten des so erhaltenen erwärmten Stroms in die Destillationssäule (7),
wobei die Abkühlung des Kopfdampfstroms in Schritt c) und die Erwärmung des Teils des mit Kohlendioxid angereicherten Flüssigkeitsstroms D in Schritt i) erreicht werden, indem der Kopfdampfstrom und der Teil des mit Kohlendioxid angereicherten Flüssigkeitsstroms D durch einen Wärmekopplungswärmetauscher (4) geleitet werden.

2. Verfahren nach Anspruch 1, **dadurch gekennzeichnet, dass** ein Teil des in Schritt d) gewonnenen Flüssigkeitsstroms abgezogen und als Zufuhrflüssigkeit in die Destillationssäule (7) eingeleitet wird.

3. Verfahren nach Anspruch 1 oder 2, **dadurch gekennzeichnet, dass** die Entspannung der Stufe f) in mehreren aufeinanderfolgenden Entspannungen durchgeführt wird, um mehrere mit Methan angereicherte Gasströme M1 zu erhalten, die dann gegebenenfalls erwärmt und mit dem mit Methan angereicherten Gasstrom M2 gemischt werden, um den mit Methan angereicherten Gasstrom M zu erhalten.

4. Verfahren nach einem der Ansprüche 1 bis 3, **dadurch gekennzeichnet, dass** die Abkühlung in Schritt c) in mehreren aufeinanderfolgenden Abkühlvorgängen vor dem Einleiten in die Trenneinheit (5) durchgeführt wird.

5. Verfahren nach einem der Ansprüche 1 bis 4, **dadurch gekennzeichnet, dass** der mit Paraffinen P angereicherte Flüssigkeitsstrom wieder in die Destillationssäule (7) injiziert wird.

6. Verfahren nach einem der Ansprüche 1 bis 5, **dadurch gekennzeichnet**, das der mit Methan angereicherte Gasstrom M erwärmt und dann verdichtet wird.

7. Verfahren nach einem der Ansprüche 1 bis 6, **dadurch gekennzeichnet, dass** ein Teil des mit Kohlendioxid angereicherten Flüssigkeitsstroms D in ein geologisches Reservoir injiziert wird.

8. Verfahren nach einem der Ansprüche 1 bis 7, **dadurch gekennzeichnet, dass** das Erdgas G 35 % bis 85 % Kohlendioxid, 15 % bis 65 % Methan und höchstens 4 % Paraffine, insbesondere 40 % bis 70 % Kohlendioxid, 30 % bis 60 % Methan und höchstens 0,5 % Paraffine enthält, wobei die Prozentsätze in molaren Werten angegeben sind.

9. Verfahren nach einem der Ansprüche 1 bis 8, **dadurch gekennzeichnet, dass** der mit Methan angereicherte Gasstrom M weniger als 22 % Kohlendioxid, vorzugsweise weniger als 20 % Kohlendioxid, besonders bevorzugt weniger als 18 % Kohlendioxid enthält, wobei die Prozentsätze in molaren Werten angegeben sind.

10. Verfahren nach einem der Ansprüche 1 bis 9, **dadurch gekennzeichnet, dass** der mit Kohlendioxid angereicherte Flüssigkeitsstrom D 60 % bis 100 % Kohlendioxid, insbesondere 70 % bis 90 % Kohlendioxid, enthält, wobei die Prozentsätze in molaren Werten angegeben sind.

11. Verfahren nach einem der Ansprüche 1 bis 10, **dadurch gekennzeichnet, dass** der mit Paraffin angereicherte Flüssigkeitsstrom P 4 % bis 40 % Paraffine, insbesondere 20 % bis 30 % Paraffine, insbesondere etwa 25 % Paraffine, enthält, wobei die Prozentsätze in molaren Werten angegeben sind.

12. Anlage zur Behandlung eines Erdgases G, das Kohlendioxid, Methan und Paraffine umfasst, um einen mit Methan angereicherten Gasstrom M, einen mit Kohlendioxid angereicherten Flüssigkeitsstrom D und einen mit Paraffinen angereicherten Flüssigkeitsstrom P zu erhalten, **dadurch gekennzeichnet, dass** sie umfasst:
- eine Entparaffinierungssäule (3),
- eine mit dem Einlass der Entparaffinierungssäule (3) verbundene Einlassleitung (10) zum Einleiten des Erdgases G in die Entparaffinierungssäule (3),
- eine Leitung am Kopf der Entparaffinierungssäule (11), die oben an der Entparaffinierungssäule (3) angeschlossen ist, um einen Kopfdampfstrom zu gewinnen, und eine Leitung am Boden der Entparaffinierungssäule (6), die am Boden der Entparaffinierungssäule (3) angeschlossen ist, um einen mit Paraffinen angereicherten Flüssigkeitsstrom P zu gewinnen,
- eine Trenneinheit (5), die von der Leitung am Kopf der Entparaffinierungssäule (11) gespeist wird,
- eine Rückflussleitung (16), die mit der Trenneinheit (5) verbunden ist, um einen Flüssigkeitsstrom als Rückflussflüssigkeit am Kopf der Entparaffinierungssäule (3) zu gewinnen und wieder einzuspeisen,
- eine Dampfleitung (12), die mit der Trenneinheit (5) verbunden ist, um einen Dampfstrom zu gewinnen,
- einen Wärmetauscher (13) und Entspanner/Abscheider (34a, 34b), die von der Dampfleitung (12) gespeist werden, um einen kondensierten Strom FC, der in einer Kondensatgewinnungsleitung (40) gewonnen wird, und einen mit Methan angereicherten Gasstrom M1, der in einer Methangewinnungsleitung (15a, 15b) gewonnen wird, zu erhalten,
- eine Destillationssäule (7), die von der Kondensatgewinnungsleitung (40) gespeist wird,
- eine obere Destillationssäulenleitung (8), die mit dem Kopf der Destillationssäule (7) verbunden ist, um einen mit Methan angereicherten Gasstrom M2 zu gewinnen,
- eine Methansammelleitung (14), die mit der Leitung am Kopf der Destillationssäule (8) und der Methangewinnungsleitung (15a, 15b) zur Gewinnung eines mit Methan angereicherten Gasstrom M verbunden ist, wahlweise über einen Kompressor (17a, 17b),
- eine Leitung am Boden der Destillationssäule (9), die mit dem Boden der Destillationssäule (7) verbunden ist, um einen mit Kohlendioxid angereicherten Flüssigkeitsstrom D zu gewinnen,
- eine Entnahmeleitung (9a), die mit der Leitung am Boden der Destillationssäule verbunden ist, um einen Teil des mit Kohlendioxid angereicherten Flüssigkeitsstroms D zu entnehmen und wieder in die Destillationssäule (7) zu injizieren,
**dadurch gekennzeichnet, dass** sie ferner einen Wärmetauscher (4) mit Wärmekopplung umfasst, durch den die obere Leitung der Entparaffinierungssäule (11) führt, wobei die Entnahmeleitung (9a) ermöglicht, den Kopfdampfstrom abzukühlen, bevor er in die Trenneinheit (5) eingeleitet wird, wobei der entnommene Teil des mit Kohlendioxid angereicherten Flüssigkeitsstroms D vor der Injektion in die Destillationssäule (7) erwärmt wird.

13. Anlage nach Anspruch 12, **dadurch gekennzeichnet, dass** eine Injektionsleitung (16a) mit der Rückflussleitung (16) verbunden ist, um einen Teil des Rückflussflüssigkeitsstroms abzuziehen und ihn als Zufuhrflüssigkeit in die Destillationssäule (7) zu injizieren.

14. Anlage nach den Ansprüchen 12 oder 13, **dadurch gekennzeichnet, dass** durch den Wärmetauscher (13) eine Kühleinheit (18) und Dampfleitungen (12), Methan-Sammelleitungen (14) und eine erste Methan-Gewinnungsleitung (15a) verlaufen, um den Dampfstrom bei gleichzeitiger Erwärmung der mit Methan angereicherten Gasströme M und M1 abzukühlen.

15. Anlage nach einem der Ansprüche 12 bis 14, **dadurch gekennzeichnet, dass** die obere Leitung der Entparaffinierungssäule (11) durch den Wärmetauscher (13) verläuft, um den oberen Dampfstrom zu kühlen, nachdem dieser den Wärmekopplungswärmetauscher (4) durchquert hat und bevor er in die Trenneinheit (5) eingeleitet wird.

16. Anlage nach einem der Ansprüche 12 bis 15, **dadurch gekennzeichnet, dass** die Leitung am Boden der Entparaffinierungssäule (6) die Destillationssäule (7) speist.

## Claims

1. Process for treating a natural gas G comprising carbon dioxide, methane and paraffins, so as to obtain a gas stream enriched with methane M, a liquid stream enriched with carbon dioxide D and a liquid stream enriched with paraffins P, said process comprising the following steps:
a) introducing the natural gas G into a deparaffinizing column (3),
b) extracting the paraffins from the natural gas G in the deparaffinizing column (3), and recovering a top vapour stream comprising carbon dioxide and methane, at the column top, and said liquid stream enriched with paraffins P at the column bottom,
c) cooling the top vapour stream then introducing it into a separation unit (5),
d) recovering a liquid stream and a vapour stream,
e) introducing all or part of the liquid stream, as reflux liquid, at the top of the deparaffinizing column (3) so as to wash, in countercurrent mode, the natural gas G introduced in step a),
f) cooling then expanding the vapour stream recovered in step d) so as to obtain a condensed stream FC and a gas stream enriched with methane M1,
g) introducing the condensed stream FC into a distillation column (7) so as to recover, at the top of the column, a gas stream enriched with methane M2 and, at the column bottom, said liquid stream enriched with carbon dioxide D,
h) mixing the gas stream enriched with methane M1 and the gas stream enriched with methane M2 so as to obtain said gas stream enriched with methane M,
i) reheating a part of the liquid stream enriched with carbon dioxide D and introducing the resulting reheated stream into the distillation column (7),
in which the cooling of the top vapour stream in step c) and the reheating of the part of the liquid stream enriched with carbon dioxide D in step i) are carried out by passing said top vapour stream and said part of the liquid stream enriched with carbon dioxide D through a thermal coupling heat exchanger (4).

2. Process according to Claim 1, **characterized in that** a part of the liquid stream recovered in step d) is withdrawn and injected, as feed liquid, into the distillation column (7).

3. Process according to Claim 1 or 2, **characterized in that** the expansion of step f) is carried out in several successive expansion operations so as to result in the obtaining of several gas streams enriched with methane M1, which are then optionally heated, then mixed with the gas stream enriched with methane M2 so as to obtain the gas stream enriched with methane M.

4. Process according to any one of Claims 1 to 3, **characterized in that** the cooling of step c) is carried out in several successive cooling operations before the introduction into the separation unit (5).

5. Process according to any one of Claims 1 to 4, **characterized in that** the liquid stream enriched with paraffins P is reinjected into the distillation column (7).

6. Process according to any one of Claims 1 to 5, **characterized in that** the gas stream enriched with methane M is heated then compressed.

7. Process according to any one of Claims 1 to 6, **characterized in that** a part of the liquid stream enriched with carbon dioxide D is injected into a geological reservoir.

8. Process according to any one of Claims 1 to 7, **characterized in that** the natural gas G comprises from 35% to 85% of carbon dioxide, from 15% to 65% of methane and at most 4% of paraffins, in particular from 40% to 70% of carbon dioxide, from 30% to 60% of methane and at most 0.5% of paraffins, the percentages being given in mole values.

9. Process according to any one of Claims 1 to 8, **characterized in that** the gas stream enriched with methane M comprises less than 22% of carbon dioxide, preferably less than 20% of carbon dioxide, more preferentially less than 18% of carbon dioxide, the percentages being given in mole values.

10. Process according to any one of Claims 1 to 9, **characterized in that** the liquid stream enriched with carbon dioxide D comprises from 60% to 100% of carbon dioxide, in particular from 70% to 90% of carbon dioxide, the percentages being given in mole values.

11. Process according to any one of Claims 1 to 10, **characterized in that** the liquid stream enriched with paraffins P comprises from 4% to 40% of paraffins, in particular from 20% to 30% of paraffins, more particularly approximately 25% of paraffins, the percentages being given in mole values.

12. Apparatus for treating a natural gas G comprising carbon dioxide, methane and paraffins, so as to obtain a gas stream enriched with methane M, a liquid stream enriched with carbon dioxide D and a liquid stream enriched with paraffins P, **characterized in that** it comprises:
- a deparaffinizing column (3),
- an inlet line (10) connected at the inlet of the deparaffinizing column (3) so as to introduce the natural gas G into the deparaffinizing column (3),
- a deparaffinizing column top line (11) connected at the top of the deparaffinizing column (3) so as to recover a top vapour stream and a deparaffinizing column bottom line (6) connected at the bottom of the deparaffinizing column (3) so as to recover a liquid stream enriched with paraffins P,
- a separation unit (5) fed by the deparaffinizing column top line (11),
- a reflux line (16) connected to the separation unit (5) so as to recover and reinject a liquid stream, as reflux liquid, as the top of the deparaffinizing column (3),
- a vapour line (12) connected to the separation unit (5) so as to recover a vapour stream,
- a heat exchanger (13) and pressure reducing valves/separators (34a, 34b) fed by the vapour line (12) so as to obtain a condensed stream FC recovered in a condensate recovery line (40) and a gas stream enriched with methane M1 recovered in a methane recovery line (15a, 15b),
- a distillation column (7) fed by the condensate recovery line (40),
- a distillation column top line (8) connected at the top of the distillation column (7) so as to recover a gas stream enriched with methane M2,
- a methane collection line (14) connected to the distillation column top line (8) and methane recovery line (15a, 15b) so as to recover a gas stream enriched with methane M, optionally by a compressor (17a, 17b),
- a distillation column bottom line (9) connected at the bottom of the distillation column (7) so as to recover a liquid stream enriched with carbon dioxide D,
- a drawing off line (9a) connected to the distillation column bottom line (9) so as to draw off and reinject a part of the liquid stream enriched with carbon dioxide D into the distillation column (7),
**characterized in that** it also comprises a thermal coupling heat exchanger (4) through which pass the deparaffinizing column top line (11) and the drawing off line (9a) making it possible to cool the top vapour stream before introduction thereof into the separation unit (5) while at the same time reheating the drawing-off part of the liquid stream enriched with carbon dioxide D before injection thereof into the distillation column (7).

13. Apparatus according to Claim 12, **characterized in that** an injection line (16a) is connected to the reflux line (16) for drawing off a part of the reflux liquid stream and injecting it, as feed liquid, into the distillation column (7).

14. Apparatus according to Claim 12 or 13, **characterized in that** a refrigeration unit (18) and the vapour line (12), the methane collect line (14), and a first methane recovery line (15a) passes through the heat exchanger (13) so as to cool the vapour stream while at the same time reheating the gas streams enriched with methane M and M1.

15. Apparatus according to any one of Claims 12 to 14, **characterized in that** the deparaffinizing column top line (11) passes through the heat exchanger (13) so as to cool the top vapour stream after passing through the thermal coupling heat exchanger (4) and before it is introduced into the separation unit (5).

16. Apparatus according to any one of Claims 12 to 15, **characterized in that** the deparaffinizing column bottom line (6) feeds the distillation column (7).
